**Europäisches Patentamt**

**European Patent Office**

**Office européen des brevets**

(19)

(11) Numéro de publication: **0 403 397 A1**

## (12) DEMANDE DE BREVET EUROPEEN

(21) Numéro de dépôt: **90401694.6**

(22) Date de dépôt: **15.06.90**

(51) Int. Cl.5: **E06B 1/60, F16B 43/00**

(30) Priorité: **16.06.89 FR 8908297**

(43) Date de publication de la demande:
**19.12.90 Bulletin 90/51**

(84) Etats contractants désignés:
**BE DE ES FR GB IT**

(71) Demandeur: **Prunier, Jean**
**192, Les Coteaux d'Auzielle, Auzielle**
**F-31650 Saint-Orens-De-Gameville(FR)**

(72) Inventeur: **Prunier, Jean**
**192, Les Coteaux d'Auzielle, Auzielle**
**F-31650 Saint-Orens-De-Gameville(FR)**

(74) Mandataire: **Morelle, Guy Georges Alain**
**CABINET MORELLE & BARDOU, SC 5,**
**Boulevard de la Méditerranée**
**F-31400 Toulouse(FR)**

(54) **Dispositif du genre cale.**

(57) L'invention a pour objet un dispositif du genre cale permettant de stabiliser ou d'assujettir un objet quelconque.

Ce dispositif est remarquable en ce qu'il est constitué d'une bande 1 formée d'une pluralité de segments 10a,..., 10e, lesdits segments étant reliés les uns aux autres, par au moins un côté 11, par des moyens d'articulation 2 de telle sorte que ladite bande soit apte à être pliée sur elle-même en accordéon, lesdits moyens d'articulation constituant une ligne de prédécoupage 20 pour détacher un ou plusieurs segments de la bande.

fig2

**EP 0 403 397 A1**

## DISPOSITIF DU GENRE CALE

La présente invention intéresse les dispositifs du genre cale destinés à stabiliser ou assujettir un objet quelconque.

De tels dispositifs sont principalement employés, mais de manière non exclusive, dans l'industrie du bâtiment où ils servent à assurer la tenue sans déformation d'éléments aussi divers qu'une fenêtre dans un précadre ou un tasseau sur un mur déformé. Les dispositifs actuellement utilisés sont constitués par des cales de dimensions et de formes disparates, disponibles le plus souvent en vrac, ce qui rend leur sélection et leur mise en place peu aisées. L'utilisateur, par exemple l'ouvrier du bâtiment, doit alors avoir en permanence à sa disposition un jeu important de cales différentes pour répondre à des besoins très divers. Ceci constitue un inconvénient qui se traduit bien évidemment par des pertes de temps et donc, à un certain degré, par un accroissement sensible du coût des chantiers.

Le dispositif proposé par la présente invention permet d'échapper à cet inconvénient. Ce dispositif se différencie fondamentalement de ceux de l'Art Antérieur dans la mesure où il apporte une réponse simple et économique au problème posé principalement par le caractère hétérogène de ces derniers.

Plus précisément, la présente invention a pour objet un dispositif du genre cale permettant de stabiliser ou d'assujettir un objet quelconque, ledit dispositif étant remarquable en ce qu'il est constitué par une bande formée d'une pluralité de segments, lesdits segments étant reliés les uns aux autres par au moins un de leur côté par des moyens d'articulation de telle sorte que ladite bande soit apte à être pliée sur elle-même en accordéon, lesdits moyens d'articulation constituant une ligne de prédécoupage pour détacher un ou plusieurs segments de la bande.

D'autres caractéristiques et avantages de la présente invention apparaîtront au cours de la description suivante donnée en regard des dessins annexés à titre illustratif, et nullement limitatif, dans lesquels:

La Figure 1 est une vue en plan d'un premier mode de réalisation d'un dispositif conforme à l'invention.

La Figure 2 est une vue en perspective du dispositif de la Figure 1, et

La Figure 3 est également une vue en perspective d'un deuxième mode de réalisation d'un dispositif selon l'invention.

L'ensemble des Figures illustre ainsi différents dispositifs de calage mettant en oeuvre les principes de l'invention. Cependant, dans le but de simplifier la description et pour faciliter sa compréhension, les mêmes références désignent sur l'ensemble des Figures les mêmes éléments.

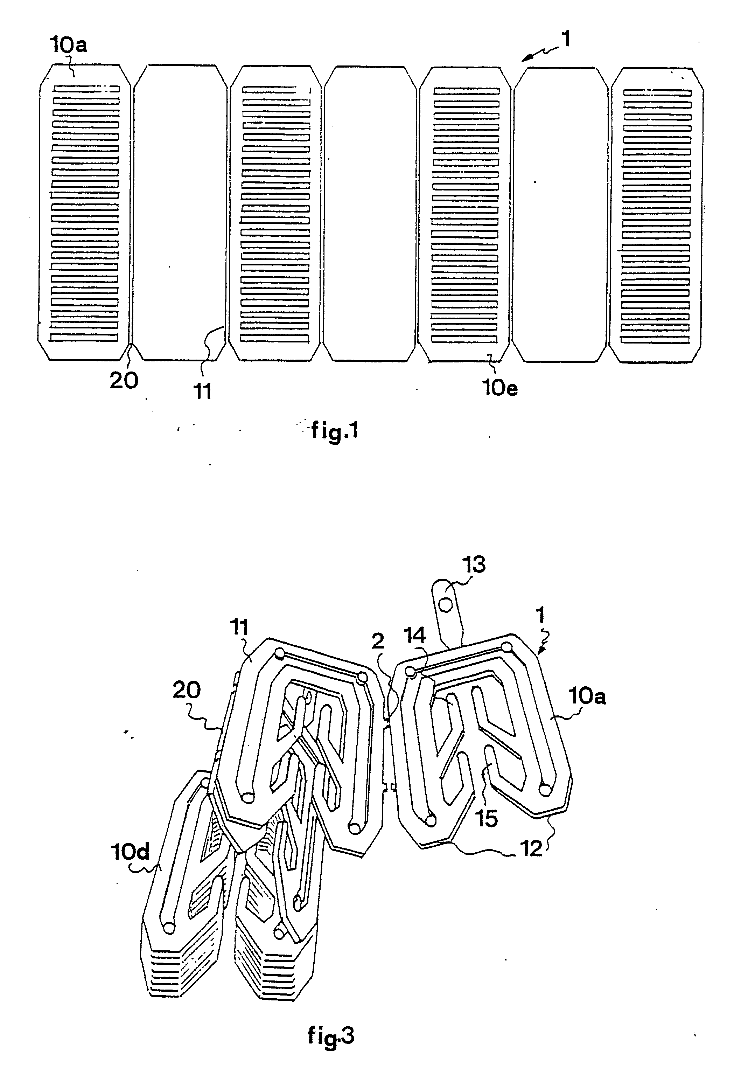

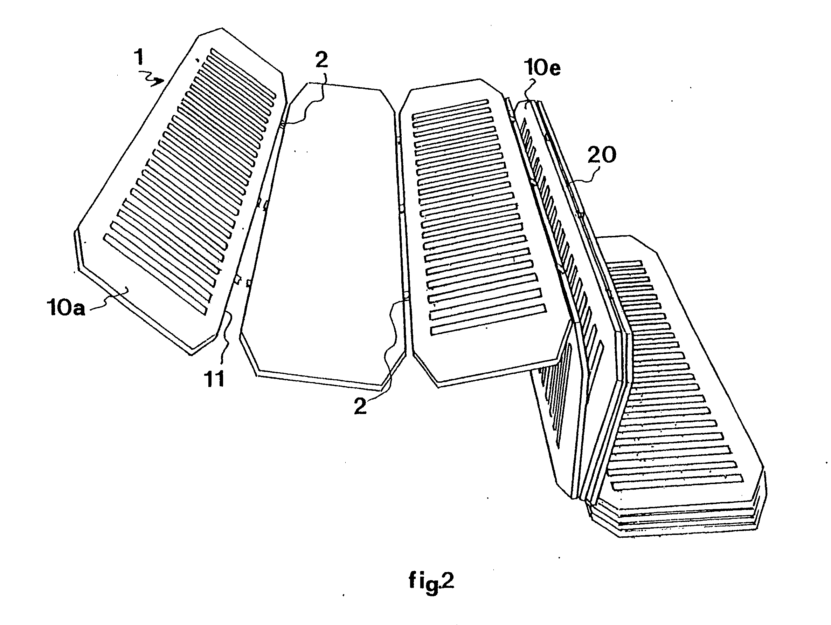

En effet, les deux réalisations illustrées comportent les caractéristiques génériques suivantes : une bande 1 formée par l'association de $n$ segments 10a....., 10e, lesdits segments étant articulés les uns autres par un de leur côté 11 de façon que, comme le montrent les Figures 2 et 3, la bande 1 puisse être pliée en accordéon et que les segments puissent être séparés les uns des autres.

A cet effet, l'articulation entre les segments est constituée par une pliure façonnée sur la bande, cette pliure étant par exemple façonnée le long d'une ligne 20 de points d'articulation 2 disposés par soudure ou collage ou plus simplement obtenus lors du moulage ou du découpage de ladite bande. La charnière ainsi réalisée constituera une ligne de prédécoupage et pour rendre encore plus aisée la désolidarisation des segments, une amorce de prédécoupage constituée par une entaille en forme de V est ouverte à chaque extrémité de la ligne 20.

Comme le montre plus particulièrement la Figure 1, les différents segments 10a..., 10e sont de formes et de dimensions identiques afin de disposer d'un modèle de cale standardisé. Dans le mode de réalisation illustré par les Figures 1 et 2, ces segments ont la forme de plaquettes, ceci afin de répondre aux besoins les plus courants, alors que dans le mode de réalisation illustré par la Figure 3, ils adoptent sensiblement la configuration d'une fourchette comportant deux dents 12 qui sont destinées à être enfichées autour d'un support tel qu'un boulon ou une vis et on observera que pour faciliter cette insertion, ils sont munis d'une patte 13 qui peut être détachée.

De préférence également, ces différents segments ont une épaisseur identique, par exemple sensiblement égale à 1 mm, de telle sorte que par pliages successifs en accordéon d'un nombre adéquat de segments, l'utilisateur puisse obtenir la cale souhaitée présentant une hauteur déterminée.

En se reportant à la Figure 3, on constate que l'espace délimité entre les deux dents 12 est occupé par deux paires de branches élastiques 14 et 15 formant "entonnoir", une extrémité desdites branches étant solidaire desdites dents, tandis que l'autre extrémité est située à proximité de l'axe médian longitudinal de la fourchette. Ces branches permettent de centrer avec précision la fourchette sur le support évoqué ci-dessus en permettant d'insérer celui-ci entre leurs deux paires et évitent que la fourchette ne se désolidarise de son support. Grâce à leur élasticité, les branches peuvent en effet s'effacer lors de la mise en place de la fourchette et reprendre ensuite leur position initiale pour former butée.

Le dispositif de l'invention peut être réalisé dans tout matériau d'une dureté conforme à son emploi. De préférence cependant il sera réalisé en matière plastique moulée.

La description qui précède permet de bien comprendre le principe de mise en oeuvre du dispositif de l'invention : en fonction de l'épaisseur de calage, il suffit d'empiler le nombre de segments nécessaires en pliant une partie de la bande en accordéon et de détacher cette partie de la portion de bande inutilisée en sectionnant suivant une ligne de prédécoupage.

## Revendications

1. Dispositif du genre cale permettant de stabiliser ou d'assujettir un objet quelconque, CARACTERISE EN CE QU'il est constitué par une bande (1) formée d'une pluralité de segments (10a,...,10e), lesdits segments étant reliés les uns aux autres, par au moins un de leur côté (11), par des moyens d'articulation (2) de telle sorte que ladite bande soit apte à être pliée sur elle-même en accordéon, lesdits moyens d'articulation constituant une ligne de prédécoupage (20) pour détacher un ou plusieurs segments de la bande.

2. Dispositif selon la Revendication 1, CARACTERISE EN CE QUE les susdits moyens d'articulation sont constitués par des pliures façonnées sur ladite bande (1).

3. Dispositif selon la Revendication 1 ou 2, CARACTERISE EN CE QUE les susdits segments (10a,... 10e) sont de formes, de dimensions et d'épaisseurs identiques.

4. Dispositif selon la Revendication 3, CARACTERISE EN CE QUE les susdits segments (10a,... 10e) ont une épaisseur sensiblement égale à 1 mm.

5. Dispositif selon la Revendication 3 ou 4, CARACTERISE EN CE QUE les susdits segments (10a,... 10e) adoptent la forme de plaquettes.

6. Dispositif selon la Revendication 3 ou 4, CARACTERISE EN CE QUE les susdits segments adoptent la forme d'une fourchette comportant au moins deux dents (12).

7. Dispositif selon la Revendication 6, CARACTERISE EN CE QUE l'espace délimité entre les susdites dents (12) est occupé par une paire au moins de branches élastiques (14, 15) formant entonnoir, une extrémité desdites branches étant solidaire desdites dents, l'autre extrémité étant située à proximité de l'axe médian longitudinal de la susdite fourchette.

8. Dispositif selon l'une quelconque des Revendications précédentes, CARACTERISE EN CE QU'il est réalisé en matière plastique.

fig.1

fig.3

fig2

EP 0 403 397 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 817 794 (WORKMAN)<br>* Colonne 1, lignes 6-21; colonne 1, ligne 63 - colonne 2, ligne 7; colonne 3, lignes 4-64; figures 1-3,10 *<br>--- | 1-8 | E 06 B 1/60<br>F 16 B 43/00 |
| A | FR-A-2 607 548 (M.E.B. MATERIEL ET ETANCHEITE DE BATIMENTS S.A.)<br>* Page 3, ligne 29 - page 4, ligne 14; figures 1,4 *<br>--- | 7 | |
| A | GB-A-1 155 898 (OTT et al.)<br>* Page 2, lignes 18-32; figures 1,4,5 *<br>--- | 7 | |
| A | FR-A-2 223 540 (FIRMA HANS FELLNER)<br>* Page 2, lignes 1-6; page 3, lignes 5-24; figures 1,2,5 *<br>--- | 1,2 | |
| A | FR-A-1 529 421 (PRONI)<br>----- | | |

**DOMAINES TECHNIQUES RECHERCHES (Int. Cl.5)**

F 16 B
E 06 B
E 04 G
E 04 C

Le présent rapport a été établi pour toutes les revendications

| Lieu de la recherche | Date d'achèvement de la recherche | Examinateur |
|---|---|---|
| LA HAYE | 03-09-1990 | CALAMIDA G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)